# EUROPÄISCHE PATENTSCHRIFT

(11) **EP 0 668 706 B1**
(45) Veröffentlichungstag und Bekanntmachung des Hinweises auf die Patenterteilung: **14.04.1999**
(21) Anmeldenummer: 95100665.9
(22) Anmeldetag: 19.01.1995
(51) Int. Cl.: H04Q 11/04, H04M 11/06

(54) **Netzabschlussgerät**
Network terminal
Terminal de réseau

(30) Priorität: 27.01.1994 CH 247/94
(43) Veröffentlichungstag der Anmeldung: 23.08.1995
(73) Patentinhaber: Siemens Schweiz AG, 8047 Zürich (CH)
(72) Erfinder: Allegranza, Patrick, CH-8004 Zürich (CH); Bürgin, Stephan, CH-8462 Rheinau (CH); Kopp, Peter, CH-8967 Widen (CH)

(56) Entgegenhaltungen:
- EP-A- 0 293 876
- EP-A- 0 350 402
- EP-A- 0 408 024
- EP-A- 0 495 423
- DE-A- 4 120 081
- DE-C- 3 917 029
- US-A- 5 125 082
- NTZ NACHRICHTENTECHNISCHE ZEITSCHRIFT, Bd. 43, Nr. 9, 1.September 1990, Seite 682, 684 XP000160570 STRAFNER M ET AL: "IOM2 - DIE UNIVERSELLE SCHNITTSTELLE FUER ISDN-IC"

## Beschreibung

Die vorliegende Erfindung betrifft ein Netzabschlussgerät nach dem Oberbegriff des Patentanspruchs 1.

Für die Endausbauphase des ISDN-Fernsprechvermittlungsnetzes, wie es beispielsweise in P. Bocker, "ISDN Das dienstintegrierende digitale Nachrichtennetzwerk", Springer Verlag, Berlin 1990, beschrieben ist, ist vorgesehen, dass nur noch digitale Teilnehmerendgeräte (ISDN-Endgeräte) eingesetzt werden. In den nächsten Jahren wird jedoch nebst den bereits eingeführten ISDN-Endgeräten ein grosser Anteil von analogen Endgeräten vorhanden sein. Diese konventionellen Endgeräte werden gemäss der ISDN-Spezifikation über eine ab-Schnittstelle sowie einen Terminaladapter mit der S-Schnittstelle des ISDN (Integrated Services Digital Network) verbunden (s. Dr. H. E. Martin, Kommunikation mit ISDN, Markt & Technik Verlag, München 1988, Seite 102 oder P. Bocker, "ISDN Das dienstintegrierende digitale Nachrichtennetzwerk", Springer Verlag, Berlin 1990, Seiten 29). Zwischen der mit der Vermittlungszentrale verbundenen zweiadrigen Teilnehmerleitung, bzw. der U-Schnittstelle und der S-Schnittstelle ist ferner ein ISDN-Netzabschluss (NT bzw. NT1 und NT2) vorgesehen. Der Anschluss der konventionellen Endgeräte an das ISDN gestaltet sich daher sehr aufwendig. Aus der EP-OS 0 495 423 ist ferner eine Anschlusseinrichtung bekannt, durch die zwei analoge Endgeräte kostengünstig mit einer U-Schnittstelle des ISDN verbindbar sind. Falls teilnehmerseitig jedoch sowohl analoge als auch digitale Endgeräte anzuschliessen sind, so wird, wie in P. Bocker, "ISDN Das dienstintegrierende digitale Nachrichtennetzwerk", Springer Verlag, Berlin 1990, Seite 29, Bild 2.7 gezeigt, noch immer ein mit einer U-Schnittstelle verbindbares ISDN-Netzabschlussgerät benötigt, das eine S-Schnittstelle aufweist, mit der die digitalen Endgeräte direkt und die analogen Endgeräte über einen Terminaladapter (TA) zu verbinden sind.

Der vorliegenden Erfindung liegt daher die Aufgabe zugrunde, ein Netzabschlussgerät zu schaffen, durch das sowohl analoge als auch digitale Endgeräte kostengünstig mit einer U-Schnittstelle verbindbar sind.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Durch das erfindungsgemässe Netzabschlussgerät sind vorzugsweise zwei analoge und sechs digitale Endgeräte mit einer U-Schnittstelle des ISDN verbindbar. Dabei können zwei der acht Endgeräte gleichzeitig betrieben werden.

Die Erfindung wird nachfolgend anhand einer Zeichnung beispielsweise näher erläutert. Dabei zeigt :
- Fig. 1: das Blockschaltbild eines erfindungsgemässen Netzabschlussgerätes
- Fig. 2: eine mit einem analogen Endgerät verbundene Baugruppe des Netzabschlussgerätes

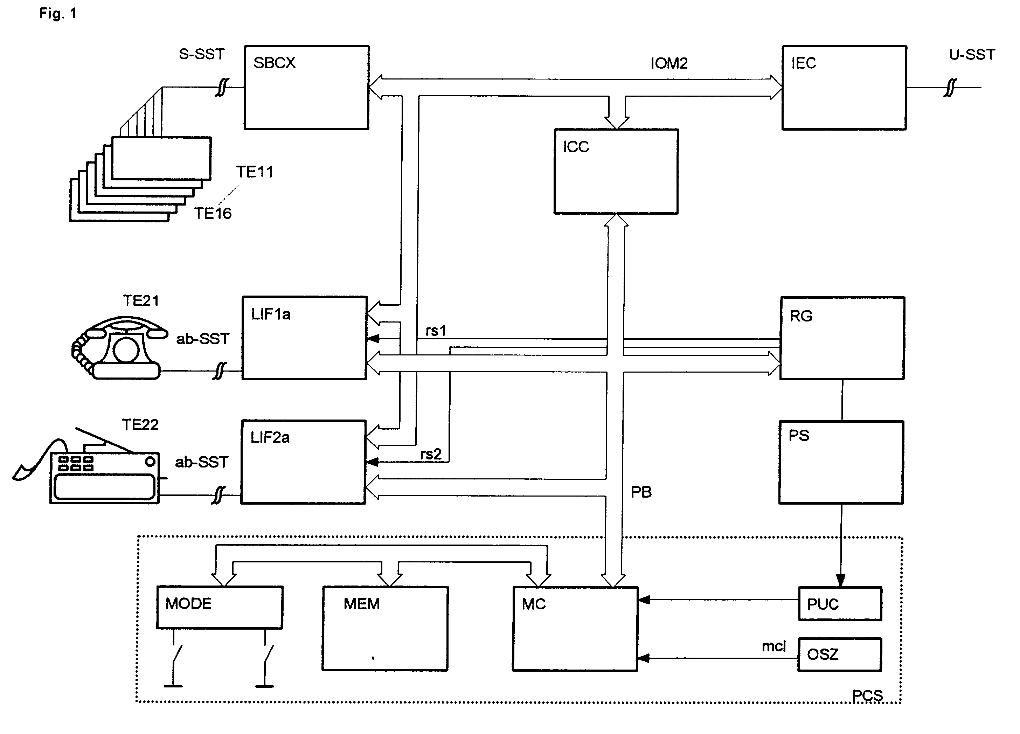

Fig. 1 zeigt ein zwei getrennte Busssysteme IOM2 (2B + D-Kanal-Bus), PB (Prozessorbus) aufweisendes Netzabschlussgerät, durch das bis zu vier analoge Teilnehmerendgeräte TE21,..., TE24 sowie bis zu sechs digitale Teilnehmerendgeräte TE11, ..., TE16 über eine U-Schnittstelle des ISDN mit einer Vermittlungszentrale verbindbar sind. Das erste Bussystem IOM2 verbindet eine mit der U-Schnittstelle verbundene Echokompensationsbaugruppe IEC mit einer Kommunikationssteuerung ICC sowie mit einer S-Schnittstellenbaugruppe SBCX und zwei ab-Schnttstellen-Baugruppen LIF1a bzw. LIF2a. Die S-Schnittstellenbaugruppe SBCX ist über eine S-Schnittstelle mit den digitalen Endgeräten TE11,..., TE16 und die ab-Schnittstellen-Baugruppen LIF1a bzw. LlF2a sind je mit einem analogen Endgerät TE21 bzw. TE22 verbunden. Das Endgerät TE22 ist im vorliegenden Fall ein Fax-Gerät. Das zweite Busssystem PB verbindet die Kommunikationssteuerung ICC, einen Rufsignalgenerator RG und die ab-Schnittstellen-Baugruppen LIF1a bzw. LlF2a mit einem Prozessorsystem PCS, welches durch einen Prozessor MC, eine Speicherbaugruppe MEM, einen Oszillator OSZ sowie eine zur Einstellung der Betriebsart vorgesehene Schalteinheit MODE gebildet wird. Ferner ist der Prozessor MC zur Stromversorgung direkt sowie über einen Power-up-Controller PUC mit der Stromversorgungseinheit PS verbunden. Durch den Power-up-Controller PUC wird dem Prozessor MC der Status der Versorgungsspannung signalisiert, damit rechtzeitig die notwendigen Ein- und Abschalt- (Power-up, Power-down). Routinen durchgeführt werden können. Für den Notbetrieb, beim Ausfall der lokalen Stromversorgung, ist es vielfach zwingend notwendig, dass der Stromverbrauch der Schaltungsanordnung stark reduziert wird (in diesem Fall erfolgt die Speisung durch die Vermittlungszentrale). Dazu wird vorgesehen, dass nur eines der (analogen oder digitalen) Endgeräte TE11, ..., TE22 in Betrieb genommen wird. Falls z.B. eines der analogen Endgeräte TE21; TE22 aktiviert wird, so werden durch den Prozessor MC alle weiteren nicht benötigten Module in einen Power-down-Modus (Schlafmodus mit minimalem Leistungverbrauch) gefahren bzw. es werden nur die benötigten Module aus dem Power-down-Modus in den betriebsfähigen Zustand versetzt.

Beim gleichzeitigen Rufen von zwei analogen Endgeräten TE21, TE22 kann der Leistungsverbrauch ferner unabhängig von der Betriebsart reduziert werden, indem die Rufsignale alternierend an die ab-Schnittstellen-Baugruppen LIF1a bzw. LlF2a abgegeben werden.

Die über eine Zweidrahtleitung mit der Vermittlungszentrale verbundene Echokompensationsbaugruppe IEC ermöglicht die Übertragung von Daten im Gleichlageverfahren (s. Dr. H. E. Martin, Kommunikation mit ISDN, Markt & Technik Verlag, München 1988, Seite 105, Bild 6.15). Die übertragenen Daten sind dabei standardmässig einem von zwei digitalen Sprachkanälen (B-Kanäle) und einem digitalen Signalisierungskanal (D-Kanal) zugeordnet. Die über den D-Kanal übermittelten Signalisierungsdaten werden von der Kommunikationssteuerung ICC an den Prozessor MC übermittelt und von diesem ausgewertet. Die Kommunikationssteuerung ICC (ISDN Communication Controller : z.B. PEB 2070, hergestellt von der Siemens AG) erbringt die D-Kanal-Verbindungsfunktionen bzw. ist für die Implementierung des D-Kanalprotokolls vorgesehen. Ferner hat der Prozessor MC über die Kommunikationssteuerung ICC und den IOM-2-Bus Zugriff zur Echokompensationsbaugruppe IEC und zur Baugruppe SBCX, die vom Prozessor MC entsprechend den vorliegenden Konfigurationsdaten programmiert werden. Durch die vom Prozessor MC gesteuerte Kommunikationssteuerung ICC werden die B-Kanäle zudem entweder zur Baugruppe SBCX oder zu den ab-Schnittstellen-Baugruppen LIF1a bzw. LlF2a durchgeschaltet. Falls beide B-Kanäle von der Baugruppe SBCX bereits besetzt sind, kann kein Freiton an die Baugruppe LIF1a bzw. LlF2a durchgeschaltet werden. Für diesen Fall wird ein intern erzeugter Gassenbesetztton (z.B. 425 Hz) an die ab-Schnittstellen-Baugruppe LIF1a bzw. LlF2a angelegt. Vorzugsweise werden vom Prozessor MC z.B. im 8 kHz-Takt Interrupt-Signale an die Kommunikationssteuerung ICC abgegeben, wonach mit jedem Interrupt ein Abtastwert des Gassenbesetzttones über das erste Bussystem IOM2 an die ab-Schnittstellen-Baugruppe LIF1a bzw. LlF2a abgegeben wird. Auf diese Weise lassen sich weitere Töne (z.B. der Freiton) an die ab-Schnittstellen-Baugruppe LIF1a bzw. LlF2a abgegeben. Der Gassenbesetztton, Gebührenimpulse oder weitere Töne lassen sich grundsätzlich jedoch beliebig, d.h. softwaremässig oder durch Teilung aus einer Referenzfrequenz, erzeugen.

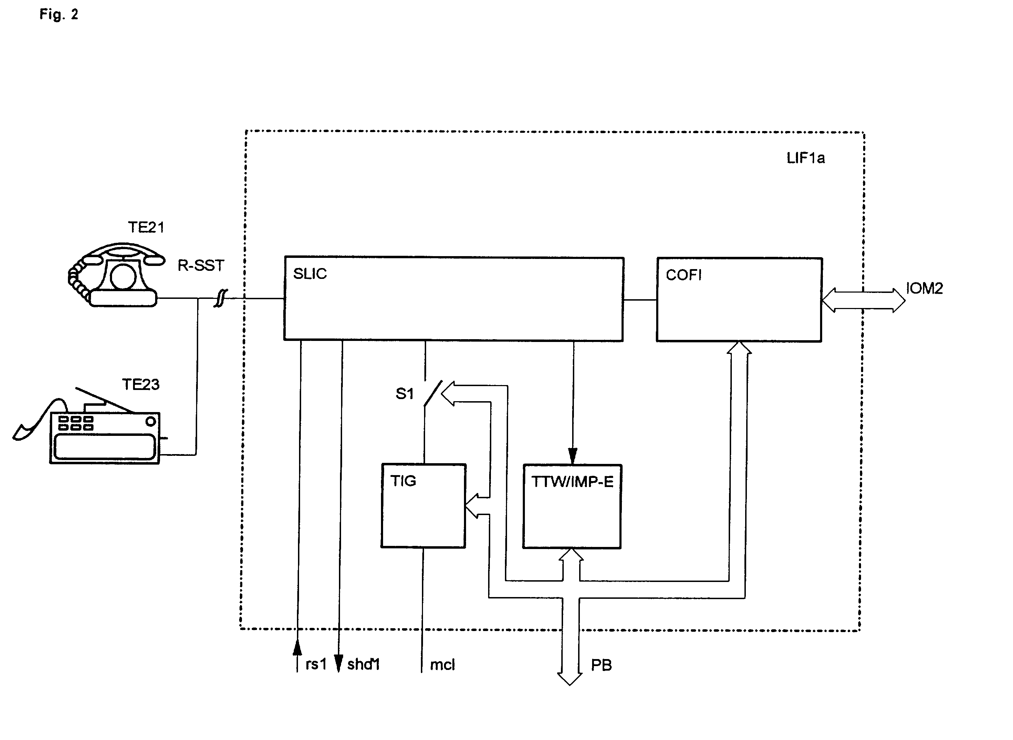

Die in Fig. 2 gezeigte mit dem analogen Endgerät TE21 und gegebenenfalls mit einem weiteren, parallel dazu vorgesehenen Endgerät TE23 (z.B. Faxgerät der Gruppe 3) verbundene Baugruppe LIF1a weist eine Wandlerbaugruppe COFI auf, die einerseits mit dem lOM2-Bus und andererseits über eine Leitungsbaugruppe SLIC und die ab-Schnittstelle ab-SST mit dem Endgerät TE21 verbunden ist. Die Wandlerbaugruppe COFI dient in Richtung Endgerät als Digital/Analog- und in Richtung zum ISDN als Analog/Digital-Wandler. Die Leitungsbaugruppe SLIC ist ferner mit einem Rufspannungsgenerator RG (s. Leitungen rsl, rs2), einem Tontasten- und Impulswahl-Empfänger TTW/IMP-E sowie über einen Schalter S1 mit einem Gebührenimpuls-Generator TIG verbunden, dem vom Oszillator OSZ ein Referenzfrequenzsignal mcl zugeführt wird. Der Schalter S1, der Gebührenimpuls-Generator TIG, der Rufspannungsgenerator RG und der Tontasten- und Impulswahl-Empfänger TTW/IMP-E sind für Steuerzwecke bzw. für den Datenverkehr über den Prozessorbus PB mit dem Prozessor MC verbunden. Durch den Prozessor MC wird dabei das Teilungsverhältnis des mit dem Oszillator OSZ verbundenen Gebührenimpuls-Generators TIG festgelegt. Aus dem vom Oszillator OSZ zugeführten Referenzfrequenzsignal mcl wird durch entsprechende Teilung für die Gebührenimpulse eine Frequenz f1 (z.B. 12 kHz) erzeugt. Die Gebührenimpulse können, nebst durch Teilung aus einer Hauptfrequenz, auch softwaremässig generiert werden. Durch die Betätigung des Schalters S1 (Schalter S2 für Baugruppe LlF2a ist nicht dargestellt) werden die entsprechenden Signale der Leitungsbaugruppe SLIC zugeführt. Vom Tontasten- und Impulswahl-Empfänger TTW/IMP-E werden die vom Endgerät TE21 erzeugten Wählsignale über den Prozessorbus PB dem Prozessor MC zugeführt. Der Tontasten- und Impulswahl-Empfänger TTW/IMP-E lässt sich dabei wahlweise software- oder hardwaremässig realisieren. Der Aufbau der Verbindung erfolgt, falls ein freier B-Kanal vorhanden ist, in Zusammenarbeit zwischen dem Prozessor MC und der Kommunikationssteuerung ICC. Falls das analoge Endgerät TE21 bzw. TE22 über Sondertasten (z.B. # (Raute) und/oder * (Stern)) verfügt, können vom Endgerät TE21 bzw. TE22 Instruktionen an den Prozessor MC übertragen werden. Beispielsweise können dem Prozessor MC die Rufnummern der ab-Schnittstellen, der Gerätetyp mit der HLC (High Layer Compatibility) Information und die gewünschte Notbetriebsart (Notbetrieb über ab- oder S-Schnittstelle oder kein Notbetrieb) angegeben oder Testsequenzen aufgerufen werden.

Die Leitungsbaugruppe SLIC ist als integrierter Baustein erhältlich (z.B: Harris HC-5502A). Ebenso wird die Wandlerbaugruppe COFI als integrierte Schaltung auf dem Markt angeboten (z.B. Siemens PEB 2060). Zur Reduktion der benötigten Leistung wird die Leitungsbaugruppe SLIC vorzugsweise jedoch diskret aufgebaut.

Die Leitungsbaugruppe SUC erfüllt die klassischen BORSCHT-Funktionen (Teilnehmer-Speisung, Überspannungsschutz, der Ruf-Steuerung, der Schleifenüberwachung und Signalisierung) mit Ausnahme der Analog/Digtal-Wandlung (Coding), die in der Wandlerbaugruppe COFI ausgeführt wird. Durch die Schleifenüberwachung wird beim Abheben des Hörers über den Prozessorbus PB oder eine separate Leitung ein Meldesignal shdl (switch hook detection) an den Prozessor MC abgegeben. Der Leitungsbaugruppe SLIC folgt die Wandlerbaugruppe COFI (Codec Filter), die zur Umwandlung des analogen Teilnehmersignals in ein PCM-Digitalsignal und umgekehrt sowie zur Bandbreitenbegrenzung und Filterung dient. Frequenzgang, Impedanzanpassung und Verstärkung/Dämpfung dieser Baugruppe sind in bevorzugten Ausführungsformen durch den Prozessor MC programmierbar.

Beschrieben werden bevorzugte Ausführungsformen der Baugruppen SLIC und COFI ferner in Samuel Hämmerli, Bauteile-Technologie im System ALBIS-ECS 10 000, Siemens-Albis-Berichte 40 (1988), Heft 1/2, Seiten 25 - 29 (s. u.a. Bild 2 und Bild 3).

Das lOM2-Bussystem besteht aus einer Bittakt- und einer Frametakt- sowie zwei Datenleitungen, von denen jede für den Datenverkehr in eine Richtung vorgesehen ist. Die dem Fachmann bekannte IOM-Schnittstelle wird z.B. in A. Kanbach / A. Körber, ISDN - Die Technik, Hüthig Verlag, Heidelberg 1990, auf Seiten 260 - 266 beschrieben. Vorzugsweise wird für das erste Bussystem IOM2 die IOM2-Schnittstelle (IOM Revision 2) verwendet, die als Weiterentwicklung aus der IOM - (1) - Schnittstelle entstand. Besonders vorteilhaft bei dieser Schnittstelle ist, dass Informationen der mit dem lOM2-Bussystem verbundenen Bausteine untereinander ausgetauscht werden können, ohne dass die B-Kanäle in Anspruch genommen werden.

Die Echokompensationsbaugruppe IEC und die S-Schnittstellen-Baugruppe SBCX lassen sich ferner durch die handelsüblichen Bausteine Siemens PEB 2091 (U-Schnittstellen-Baustein) bzw. Siemens PEB 2081 (S-Schnittstellen-Baustein) realisieren.

Zur Vermeidung von Kollisionen im D-Kanal, die auftreten, falls die digitalen Endgeräte TE11,..., TE16 gleichzeitig einen Verbindungsaufbau initialisieren, ist die bekannte D-Kanal Zugriffssteuerung vorgesehen, wie sie in A. Kanbach / A. Körber, ISDN - Die Technik, Hüthig Verlag, Heidelberg 1990, auf Seiten 105 - 109 beschrieben ist.

Zur Vermeidung von Kollisionen im D-Kanal, die auftreten, falls digitale und analoge Endgeräte TE11, ..., TE16 und TE21,..., TE24 gleichzeitig einen Verbindungsaufbau initialisieren, sind folgende Massnahmen vorgesehen. Grundsätzlich ist vorgesehen, dass jeweils nur ein einziges Endgerät TE auf den D-Kanal zugreifen kann. Dies wird durch eine für jedes Endgerät TE verwendete Kollisions-Erkennung vorgesehen, die durch eine Reflektion der gesendeten Signalisierungsdaten in einem Echo-Kanal ermöglicht wird. Zur Vermeidung von Kollisionen beim Verbindungsaufbau für ein analoges Endgerät TE21, TE22 überwacht die S-Schnittstellenbaugruppe SBCX die auf dem D-Kanal eintreffenden Daten. Beim Eintreffen eines D-Kanal-requests (Anfrage zur Zugriffserlaubnis) von der Kommunikationssteuerung ICC gibt die S-Schnittstellenbaugruppe SBCX der Kommunikationssteuerung ICC die Berechtigung auf den D-Kanal zuzugreifen, falls sie den D-Kanal selbst nicht benutzt. Gleichzeitig werden durch die S-Schnittstellenbaugruppe SBCX alle digitalen Endgeräte TE11, ..., TE16 daran gehindert, auf den D-Kanal zuzugreifen. Dies geschieht, indem der E-Kanal (Echo-Kanal) auf Null gesetzt wird. Die Kommunikationssteuerung ICC ist daher in der Lage, einen HDLC-Rahmen an den D-Kanal abzugeben, ohne dass eine Kollision auftritt. Aufgrund der von der Kommunikationssteuerung ICC abgegebenen Signalisierungsdaten wird ein Verbindungsaufbau für die analogen Endgeräte ermöglicht, wie er z.B. in A. Kanbach / A. Körber, ISDN - Die Technik, Hüthig Verlag, Heidelberg 1990, auf Seiten 73 - 75 beschrieben ist.

## Patentansprüche

1. Netzabschlussgerät zur Verbindung von Endgeräten (TE) mit einer U-Schnittstelle (U-SST) eines ISDN-Fernmeldenetzes, mit einem Prozessor (MC) und mit einer mit der U-Schnittstelle (U-SST) verbundenen Echokompensationsbaugruppe (IEC), die über ein erstes Bussystem (IOM2) mit einer Kommunikationssteuerung (ICC) sowie mit mindestens einer zu einer ab-Schnittstelle (ab-SST) kompatiblen ab-Schnttstellen-Baugruppe (LIF1a, LlF2a) verbunden ist, die eine Leitungsbaugruppe (SLIC) und eine Wandlerbaugruppe (COFI) aufweist, **dadurch gekennzeichnet**, dass das erste Bussystem (IOM2) ferner mit einer eine S-Schnittstelle (S-SST) aufweisenden S-Schnittstellen-Baugruppe (SBCX) verbunden ist, dass der Prozessor (MC) über ein zweites Bussystem (PB) und die damit verbundene Kommunikationssteuerung (ICC) Zugriff auf das erste Bussystem (IOM2) hat, dass die B-Kanäle durch die Kommunikationssteuerung (ICC) der ab-Schnittstellen-Baugruppe (LIF1a, LlF2a) zuschaltbar sind und dass der Prozessor (MC) zur Auswertung und Erstellung der D-Kanal-Signalisierungsdaten für die ab-Schnittstellen-Baugruppe (LIF1a, LlF2a) geeignet ist.

2. Netzabschlussgerät nach Anspruch 1, **dadurch gekennzeichnet,** dass der Prozessor (MC) zur Übertragung von Signalisierungsdaten auf den D-Kanal des ersten Bussystems (IOM2) geeignet ist.

3. Netzabschlussgerät nach Anspruch 1 oder 2, **dadurch gekennzeichnet,** dass die Kommunikationssteuerung (ICC), gesteuert durch den Prozessor (MC), zur Abgabe digitalisierter Töne, vorzugsweise zur Abgabe von Gassenbesetztton und Freiton, über das erste Bussystem (IOM2) an die ab-Schnittstellen-Baugruppe (LIF1a, LIF2a) geeignet ist.

4. Netzabschlussgerät nach Anspruch 1, 2 oder 3, **dadurch gekennzeichnet**, dass der Prozessor (MC) über das erste oder das zweite Bussystem (IOM2, PB) zur Programmierung der S-Schnittstellenbaugruppe (SBCX) und/oder der Wandler-Baugruppe (COFI) geeignet ist.

5. Netzabschlussgerät nach einem der Ansprüche 1 bis 4, **dadurch gekennzeichnet**, dass ein vom Prozessor (MC) gesteuerter Gebührenimpuls-Generator (TIG) vorgesehen ist, dem von einem Oszillator (OSZ) ein Referenzfrequenzsignal (mcl) zugeführt wird, das entsprechend den Instruktionen vom Prozessor (MC) teilbar und über einen vom Prozessor (MC) betätigten Schalter (S1; S2) an die Leitungsbaugruppe (SLIC) abgebbar ist.

6. Netzabschlussgerät nach einem der Ansprüche 1 bis 5, **dadurch gekennzeichnet**, dass ein vom Prozessor (MC) gesteuerter Rufsignalgenerator (RG) vorgesehen ist, der über Leitungen (rs1, rs2) mit der Leitungsbaugruppe (SLIC) der ab-Schnittstellen-Baugruppen (LIF1a bzw. LIF2a) verbunden ist und der vorzugsweise jeweils ein Signal abgibt, das beim Starten und Stoppen jeweils beim Nulldurchgang beginnt bzw. endet

7. Netzabschlussgerät nach einem der Ansprüche 1 bis 6, **dadurch gekennzeichnet**, dass der Prozessor (MC) über Leitungen (shd1, shd2) mit der Leitungsbaugruppe (SLIC) der ab-Schnittstellen-Baugruppen (LIF1a bzw. LIF2a) verbunden ist.

8. Netzabschlussgerät nach einem der Ansprüche 1 bis 7, **dadurch gekennzeichnet**, dass der Prozessor (MC) über einen Prozessorsystembus (PSB) mit einem Datenspeicher (MEM) und einer Schalteinheit (MODE) verbunden ist, bei der mittels Schaltern, die gewünschte Betriebsart einstellbar ist.

9. Netzabschlussgerät nach einem der Ansprüche 1 bis 8, **dadurch gekennzeichnet**, dass der Prozessor (MC) über das zweite Bussystem (PB) oder direkte Befehlsleitungen zur Abgabe von Power-up- und Power-down-Signalen an die Leitungsbaugruppen SLIC, die Wandler-Baugruppen (COFI), den Rufsignalgenerator (RG) und/oder die S-Schnittstellen-Baugruppe (SBCX) geeignet ist.

10. Netzabschlussgerät nach einem der Ansprüche 1 bis 9, **dadurch gekennzeichnet**, dass die Kommunikationssteuerung (ICC) und der S-Schnittstellenbaustein (SBCX) derart programmiert sind, dass die Kommunikationssteuerung (ICC) nur Signale an den D-Kanal abgibt, falls eine Berechtigungsanfrage (D-Kanal-request) der Kommunikationssteuerung (ICC) vom S-Schnittstellenbaustein (SBCX) mit einer Zugriffserlaubnis (enable) beantwortet wird.

## Claims

1. Network terminating device for connecting terminals (TE) to a U-interface (U-SST) of an ISDN telecommunication network, comprising a processor (MC) and an echo cancellation module (IEC), which is connected to the U-interface (U-SST) and is connected by way of a first bus system (IOM2) to a communications control (ICC) and also to at least one ab-interface module (LIF1a, LIF2a), which is compatible with an ab-interface (ab-SST) and has a line module (SLIC) and a converter module (COFI), characterised in that the first bus system (IOM2) is furthermore connected to an S-interface module (SBCX) having an S-interface (S-SST), in that the processor (MC) has access to the first bus system (IOM2) by way of a second bus system (PB) and the communications control (ICC) connected thereto, in that the B-channels can be connected to the ab-interface module (LIF1a, LIF2a) by the communications control (ICC), and in that the processor (MC) is suitable for evaluating and preparing the D-channel signalling data for the ab-interface module (LiF1a, LIF2a).

2. Network terminating device according to claim 1, characterised in that the processor (MC) is suitable for transmitting signalling data on the D-channel of the first bus system (IOM2).

3. Network terminating device according to claim 1 or 2, characterised in that the communications control (ICC), controlled by the processor (MC), is suitable for delivering digitalised tones, preferably for delivering the occupied tone and ringing tone, to the ab-interface module (LIF1a, LIF2a) by way of the first bus system (IOM2).

4. Network terminating device according to claim 1, 2 or 3, characterised in that the processor (MC), by way of the first or the second bus system (IOM2, PB), is suitable for programming the S-interface module (SBCX) and/or the converter module (COFI).

5. Network terminating device according to one of the claims 1 to 4, characterised in that there is provided a call-charge pulse generator (TIG) which is controlled by the processor (MC) and to which a reference-frequency signal (mcl) is supplied by an oscillator (OSZ), which signal can be divided in accordance with the instructions of the processor (MC) and delivered to the line module (SLIC) by way of a switch (S1; S2) which is actuated by the processor (MC).

6. Network terminating device according to one of the claims 1 to 5, characterised in that there is provided a ringing-signal generator (RG), which is controlled by the processor (MC) and is connected by way of lines (rs1, rs2) to the line module (SLIC) of the ab-interface modules (LIF1a and LIF2a respectively) and which preferably delivers in each case a signal which, upon starting and stopping, starts and ends, respectively, in each case at the zero crossing.

7. Network terminating device according to one of the claims 1 to 6, characterised in that the processor (MC) is connected by way of lines (shd1, shd2) to the line module (SLIC) of the ab-interface modules (LIF1a and LIF2a respectively).

8. Network terminating device according to one of the claims 1 to 7, characterised in that the processor (MC) is connected by way of a processor system bus (PSB) to a data memory (MEM) and a switch unit (MODE), in which the desired mode of operation can be set by means of switches.

9. Network terminating device according to one of the claims 1 to 8, characterised in that the processor (MC), by way of the second bus system (PB) or direct control lines, is suitable for delivering power-up signals and power-down signals to the line modules SLIC, the converter modules (COFI), the ringing-signal generator (RG) and/or the S-interface module (SBCX).

10. Network terminating device according to one of the claims 1 to 9, characterised in that the communications control (ICC) and the S-interface module (SBCX) are programmed in such a way that the communications control (ICC) outputs signals on the D-channel only if an authorisation enquiry (D-channel request) of the communications control (ICC) is answered by the S-interface module (SBCX) with an access permission (enable).

## Revendications

1. Terminal de réseau pour relier des terminaux (TE) à une interface U (U-SST) d'un réseau téléphonique RNIS, comportant un processeur (MC) et un module d'annulation d'écho (IEC) qui est relié à l'interface U (U-SST) et, par l'intermédiaire d'un premier système de bus (IOM2), à une commande de communication (ICC) ainsi qu'à au moins un module d'interface ab (LIF1a, LIF2a) qui est compatible avec une interface ab (ab-SST) et qui comporte un module de ligne (SLIC) et un module convertisseur (COFI), **caractérisé par le fait que** le premier système de bus (IOM2) est aussi relié à un module d'interface S (SBCX) comportant une interface S (S-SST), que le processeur (MC) a accès au premier système de bus (IOM2) par l'intermédiaire d'un deuxième système de bus (PB) et de la commande de communication (ICC) reliée à celui-ci, que les canaux B peuvent être raccordés par la commande de communication (ICC) du module d'interface ab (LIF1a, LIF2a), et que le processeur (MC) est conçu pour le traitement et l'élaboration des données de signalisation de canal D pour le module d'interface ab (LIF1a, LIF2a).

2. Terminal de réseau selon la revendication 1, **caractérisé par le fait que** le processeur (MC) est conçu pour la transmission de données de signalisation sur le canal D du premier système de bus (IOM2).

3. Terminal de réseau selon la revendication 1 ou 2, **caractérisé par le fait que** la commande de communication (ICC), commandée par le processeur (MC), est conçue pour la délivrance de tonalités numérisées, de préférence pour la délivrance de tonalités d'encombrement et de tonalités de retour d'appel, au module d'interface ab (LIF1a, LIF2a) par l'intermédiaire du premier système de bus (IOM2).

4. Terminal de réseau selon la revendication 1, 2 ou 3, **caractérisé par le fait que** le processeur (MC) est conçu par l'intermédiaire du premier ou du deuxième système de bus (IOM2, PB) pour la programmation du module d'interface S (SBCX) et/ou du module convertisseur (COFI).

5. Terminal de réseau selon l'une des revendications 1 à 4, **caractérisé par le fait qu**'il est prévu un générateur d'impulsions de taxation (TIG) qui est commandé par le processeur (MC) et auquel un oscillateur (OSZ) envoie un signal de fréquence de référence (mcl) qui peut être divisé selon les instructions du processeur (MC) et qui peut être délivré au module de ligne (SLIC) par l'intermédiaire d'un interrupteur (S1 ; S2) actionné par le processeur (MC).

6. Terminal de réseau selon l'une des revendications 1 à 5, **caractérisé par le fait qu**'il est prévu un générateur de signal d'appel (RG) qui est commandé par le processeur (MC), qui est relié par l'intermédiaire de lignes (rs1, rs2) au module de ligne (SLIC) des modules d'interface ab (LIF1a, LIF2a) et qui délivre de préférence à chaque fois un signal qui commence ou se termine, lors du début ou de l'arrêt, à chaque fois au passage par zéro.

7. Terminal de réseau selon l'une des revendications 1 à 6, **caractérisé par le fait que** le processeur (MC) est relié par l'intermédiaire de lignes (shd1, shd2) au module de ligne (SLIC) des modules d'interface ab (LIF1a, LIF2a).

8. Terminal de réseau selon l'une des revendications 1 à 7, **caractérisé par le fait que** le processeur (MC) est relié par l'intermédiaire d'un système de bus de processeur (PSB) à une mémoire de données (MEM) et à une unité de commutation (MODE) qui permet de régler au moyen de commutateurs le mode de fonctionnement souhaité.

9. Terminal de réseau selon l'une des revendications 1 à 8, **caractérisé par le fait que** le processeur (MC) est conçu par l'intermédiaire du deuxième système de bus (PB) ou de lignes d'instruction directes pour la délivrance de signaux Power-up et Power-down aux modules de lignes SLIC, aux modules convertisseurs (COFI), au générateur de signal d'appel (RG) et/ou au module d'interface S (SBCX).

10. Terminal de réseau selon l'une des revendications 1 à 9, **caractérisé par le fait que** la commande de communication (ICC) et le module d'interface S (SBCX) sont programmés de telle sorte que la commande de communication (ICC) délivre des signaux au canal D seulement si une demande d'autorisation (D-channel-request) de la commande de communication (ICC) a reçu une réponse du module d'interface S (SBCX) indiquant une autorisation d'accès (enable).
